# EUROPÄISCHE PATENTSCHRIFT

(11) **EP 2 994 659 B1**
(45) Veröffentlichungstag und Bekanntmachung des Hinweises auf die Patenterteilung: **22.04.2020**
(21) Anmeldenummer: 14727418.7
(22) Anmeldetag: 08.05.2014
(51) Int. Cl.: F16D 1/08

(54) **ANORDNUNG MIT HOHLWELLE, ANTRIEBSWELLE UND SPANNVORRICHTUNG**
ARRANGEMENT COMPRISING A HOLLOW SHAFT, AN INPUT SHAFT AND A CLAMPING DEVICE
DISPOSITIF PRÉSENTANT UN ARBRE CREUX, UN ARBRE D'ENTRAÎNEMENT ET UN DISPOSITIF DE SERRAGE

(30) Priorität: 08.05.2013 DE 102013208568
(43) Veröffentlichungstag der Anmeldung: 16.03.2016
(73) Patentinhaber: Lenze Drives GmbH, 32699 Extertal (DE)
(72) Erfinder: GÖTZ, Tino, 30974 Wennigsen (DE); GUHL, Ralf, 31855 Aerzen (DE)
(74) Vertreter: Patentanwälte Ruff, Wilhelm, Beier, Dauster & Partner mbB
(86) Internationale Anmeldenummer: PCT/EP2014/059481
(87) Internationale Veröffentlichungsnummer: WO 2014/180963

(56) Entgegenhaltungen:
- EP-A1- 0 889 255
- EP-A1- 1 650 403
- FR-A1- 2 393 189
- GB-A- 1 046 938
- US-A1- 2012 076 575
- US-S- D 358 075

## Beschreibung

Die Erfindung betrifft eine Anordnung mit einer Hohlwelle, einer in der Hohlwelle teilweise enthaltenen Antriebswelle und einer Spannvorrichtung. Die Spannvorrichtung weist einen losen Zustand, in welchem die Hohlwelle und die Antriebswelle voneinander entfernbar sind, und einen festen Zustand, in welchem die Hohlwelle mit der Antriebswelle verbunden ist, auf.

Gattungsgemäße Anordnungen werden beispielsweise verwendet, um eine Abtriebseite eines Getriebes mit einer Antriebswelle zu verbinden. Dabei ist typischerweise die Hohlwelle mit dem Getriebe verbunden, so dass zwischen dem Getriebe und der Hohlwelle ein Drehmoment übertragen werden kann. Die Antriebswelle ist typischerweise als Vollwelle ausgeführt.

Die Spannvorrichtung dient zum kraftschlüssigen Verbinden der Hohlwelle mit der Antriebswelle, so dass auch zwischen der Hohlwelle und der Antriebswelle ein Drehmoment übertragen werden kann. Für die Montage weist die Spannvorrichtung den losen Zustand auf, in welchem die Antriebswelle und die Hohlwelle relativ zueinander noch nicht fixiert sind, so dass die Antriebswelle in die Hohlwelle eingeführt werden kann. Anschließend wird typischerweise die Spannvorrichtung in den festen Zustand überführt, so dass die Hohlwelle mit der Antriebswelle kraftschlüssig verbunden ist. Damit sind die beiden Wellen zueinander fixiert.

Eine bekannte Anordnung zeigt beispielsweise das Dokument DE 742 39 87 U. Dabei ist die Hohlwelle mittels eines Pressrings auf die Antriebswelle gespannt, wobei der Durchmesser der Hohlwelle über deren Umfang gleichmäßig verjüngt wird. Dabei wird die Hohlwelle auch tangential gepresst.

Eine weitere Ausführung zeigt das Dokument DE 42 30 941 A1, wobei vorgeschlagen wird, die Hohlwelle beidseitig mit einem Innenkonus zu versehen, und über ein zusätzliches konusförmiges und geschlitztes Adapterstück eine Toleranz zwischen Hohlwelle und Antriebswelle auszugleichen. Hierbei kann es zum axialen Versatz zwischen den Wellen beim Übergang der Spannvorrichtung in den festen Zustand kommen.

Eine weitere Ausführung zeigt das Dokument DE 100 600 37 C1, in welchem vorgeschlagen wird, die Hohlwelle zweiseitig mit einem Innenkonus zu versehen und über ein zusätzliches konusförmiges und geschlitztes Adapterstück eine etwaige Toleranz zwischen den Wellen auszugleichen. Hierzu ist jedoch eine erhöhte Anzahl an Elementen sowie Platz bei der Montage notwendig.

Eine weitere Ausführung zeigt das Dokument GB 1 046 938 A, wobei vorgeschlagen wird, die Hohlwelle mit zwei Klemmbacken an die Antriebswelle zu klemmen. Die Klemmwirkung wird durch zwei Schrauben erreicht, die die zwei Klemmbacken zusammenhalten. Dabei ist die Klemmwirkung der Klemmbacken abhängig vom Anzugsmoment der Schrauben.

Eine weitere Ausführung zeigt das Dokument FR 2 393 189 A1, wobei vorgeschlagen wird, die Hohlwelle derart zu verformen, dass der kleinere Innenhüllkreis der Hohlwelle etwas kleiner ist als der Wellendurchmesser, und dass die Hohlwelle und die Welle dann auf- bzw. ineinander gepresst werden können.

Die US 2012/0076575 A1 zeigt eine Anordnung, aufweisend: eine Hohlwelle, eine in der Hohlwelle teilweise enthaltene Antriebswelle und eine Spannvorrichtung, wobei die Spannvorrichtung einen losen Zustand, in welchem die Hohlwelle und die Antriebswelle voneinander entfernbar sind, und einen festen Zustand, in welchem die Hohlwelle mit der Antriebswelle verbunden ist, aufweist. Die Spannvorrichtung leitet beim Übergang vom losen in den festen Zustand an zwei diskreten, entlang eines Umfangs der Hohlwelle angeordneten Einleitungsstellen radial auf die Hohlwelle gerichtete Kräfte in die Hohlwelle ein, so dass sich die Hohlwelle an den Einleitungsstellen in Richtung auf die Antriebswelle zu und zwischen den Einleitungsstellen von der Antriebswelle weg verbiegt.

Die US D 358 075 S zeigt einen mechanischen Lüfterrad-Abzieher, wobei ein Spannring mit einer Mehrzahl von radial verstellbaren Schrauben ausgebildet ist, wobei jeweils eine Schraube einer Einleitungsstelle zum Einleiten einer radial auf eine Hohlwelle gerichteten Kraft in die Hohlwelle zugeordnet ist.

### Aufgabe und Lösung

Der Erfindung liegt die Aufgabe zugrunde, eine Anordnung vorzusehen, bei welcher möglichst große Toleranzen zwischen Antriebswelle und Hohlwelle ausgeglichen werden können, wobei dies vorzugsweise möglichst einfach und mit möglichst wenig Platzbedarf erfolgen soll.

Die Erfindung löst die Aufgabe durch eine Anordnung nach Anspruch 1 oder 8. Bevorzugte Ausführungsformen sind beispielsweise Gegenstand der Unteransprüche, deren Wortlaut hiermit durch Bezugnahme zum Inhalt der Beschreibung gemacht wird.

Die Erfindung betrifft eine Anordnung mit einer Hohlwelle, einer in der Hohlwelle teilweise enthaltenen Antriebswelle, sowie mit einer Spannvorrichtung. Die Spannvorrichtung weist einen losen Zustand auf, in welchem die Hohlwelle und die Antriebswelle voneinander entfernbar sind. Sie weist ferner einen festen Zustand auf, in welchem die Hohlwelle mit der Antriebswelle verbunden ist.

Erfindungsgemäß leitet die Spannvorrichtung beim Übergang vom losen in den festen Zustand an zumindest drei diskreten, entlang eines Umfangs der Hohlwelle angeordneten Einleitungsstellen radial auf die Hohlwelle gerichtete Kräfte in die Hohlwelle ein, so dass sich die Hohlwelle an den Einleitungsstellen in Richtung auf die Antriebswelle zu und zwischen den Einleitungsstellen von der Antriebswelle weg verbiegt.

Damit wird erreicht, dass die Hohlwelle nicht mehr tangential auf Druck, sondern überwiegend auf Biegung beansprucht wird. Dies ermöglicht eine deutlich weitergehende Verformbarkeit der Hohlwelle, für welche auch weniger Kraft erforderlich ist als bei einer Ausführung gemäß dem Stand der Technik, bei welcher die Hohlwelle tangential auf Druck beansprucht wird. Gleichzeitig wird eine Selbstzentrierung erreicht. Es besteht auch keine Notwendigkeit, Schlitze zum Überbrücken hoher Passungstoleranzen vorzusehen. Es erfolgt eine direkte Kraftübertragung ohne zusätzliches Adapterstück, wobei Torsionsfestigkeit und Torsionssteifigkeit erhalten bleiben.

Bei den Einleitungsstellen handelt es sich um diejenigen Stellen entlang eines Umfangs der Hohlwelle, an welchen die Hohlwelle radial auf die Hohlwelle gerichtete Kräfte aufnimmt und sich dementsprechend zur Antriebswelle hin verbiegt. Diese sind bevorzugt gleichmäßig über den Umfang der Hohlwelle verteilt. Weiter bevorzugt handelt es sich dabei um genau drei Einleitungsstellen, wodurch eine sichere Verbindung zwischen den Wellen ermöglicht wird und gleichzeitig jeweilige zum Verbiegen zur Verfügung stehende Umfangsabschnitte zwischen den Einleitungsstellen möglichst lang sind.

Zwischen den Einleitungsstellen biegt sich die Hohlwelle von der Antriebswelle weg, so dass der radiale Abstand in jeweiligen Bereichen zwischen den Einleitungsstellen größer ist als der radiale Abstand zwischen der Hohlwelle und der Antriebswelle im losen Zustand der Spannvorrichtung. Diese Bereiche verlaufen entlang des Umfangs der Hohlwelle und nehmen nicht den gesamten Umfangsabschnitt zwischen zwei umfangsmäßig benachbarten Einleitungsstellen ein, weil die Hohlwelle benachbart zu den Einleitungsstellen an der Antriebswelle anliegt.

Die erfindungsgemäße Anordnung kann beispielswiese zum Verbinden der Hohlwelle eines Getriebes mit der Antriebswelle oder Abtriebswelle einer Anlage/Maschine vorgesehen bzw. ausgebildet sein.

Die Hohlwelle ist insbesondere dazu ausgebildet, die radial mittels der Spannvorrichtung eingeleitete Kraft über einen rein radialen Kraftfluss, d.h. insbesondere frei von tangentialen und/oder axialen Kraftkomponenten, durch die Hohlwelle hindurch direkt radial in eine radial fluchtende Klemmstelle zwischen Hohlwelle und Antriebswelle zu führen. Mit anderen Worten wird die von der Spannvorrichtung eingeleitete radiale Kraft von der Hohlwelle radial weitergleitet und wirkt radial bzw. normal auf die Antriebswelle, d.h. die Krafteinleitung bewirkt bevorzugt keine tangentialen und/oder axialen Kräfte in der Hohlwelle. Die Einleitungsstellen liegen bevorzugt direkt über der Klemmstelle, sind also geometrisch exakt festgelegt.

Die Kraft resultiert aus der mittels der Spannvorrichtung bewirkten elastischen Verformung, wobei die in der Hohlwelle gespeicherte elastische Energie den Klemmkräften entgegensteht, weswegen sie deformierbar gestaltet ist. Damit die Hohlwelle diesen Klemmvorgang nicht behindert, ist die Hohlwelle bevorzugt polygonförmig verformbar ausgebildet.

Die Spannvorrichtung ist an der Übertragung des Wellendrehmoments selbst nicht beteiligt.

Eine Materialstärke der Hohlwelle kann über den Umfang der Hohlwelle variieren, d.h. eine Außenkontur der Hohlwelle kann von einer Innenkontur der Hohlwelle abweichen. Die Materialstärke der Hohlwelle kann derart über den Umfang variieren, dass an den wenigstens drei Einleitungsstellen die Materialstärke ein jeweiliges lokales Maximum aufweist.

Entsprechend kann eine Materialstärke einer Adapterhülse über den Umfang der Adapterhülse variieren, d.h. eine Außenkontur der Adapterhülse kann von einer Innenkontur der Adapterhülse abweichen. Die Materialstärke der Adapterhülse kann derart über den Umfang variieren, dass an den wenigstens drei Einleitungsstellen die Materialstärke ein jeweiliges lokales Maximum aufweist.

Nachfolgend werden mehrere Alternativen bzw. mögliche Ausführungen der erfindungsgemäßen Anordnung sowie gegebenenfalls jeweilige Varianten dieser Ausführungen beschrieben.

Gemäß einer ersten erfindungsgemäßen Ausführung ist die Spannvorrichtung als Spannring ausgeführt, welcher eine konische Bohrung aufweist. Ferner ist die Spannvorrichtung relativ zur Hohlwelle axial verschiebbar angeordnet, so dass sie beim Übergang vom losen in den festen Zustand die Hohlwelle mittels der konischen Bohrung an den Einleitungsstellen radial einwärts drückt.

Diese Ausführung erlaubt es, durch eine axiale Bewegung des Spannrings die nötigen radial auf die Hohlwelle gerichteten Kräfte an den Einleitungsstellen zu erzeugen. Eine solche axiale Verschiebung kann beispielsweise durch axial angeordnete Schrauben erreicht werden. Damit ist es möglich, unter Aufwendung eines relativ geringen Kraftaufwands zum Drehen einer Schraube erheblich höhere Kräfte auf die Hohlwelle zu erzeugen.

Der Spannring ist bevorzugt als geschlossener Spannring ausgeführt. Dies erhöht die Stabilität des Spannrings. Eine solche Ausführung als geschlossener Spannring ist möglich, weil der Spannring bei der erfindungsgemäßen Ausführung seinen Umfang nicht verändern muss.

Gemäß einer ersten Variante der ersten Ausführung weist die Hohlwelle ein Außenprofil auf, welches an den Einleitungsstellen jeweils eine radial nach außen gerichtete, in axialer Richtung konisch ausgeführte Erhebung aufweist. Durch diese Erhebungen wird die Lage der Einleitungsstellen definiert. Die Ausbildung solcher Erhebungen auf der Hohlwelle ermöglicht eine Definition der Einleitungsstellen durch die Formgebung der Hohlwelle.

Die Erhebungen können polygonförmig ausgeführt sein, was beispielsweise bedeuten kann, dass diese einen Querschnitt haben, welcher rechteck- oder trapezförmig ist. Es sei erwähnt, dass bei einer solchen Rechteck- bzw. Trapezform oder auch bei einer anderen polygonalen oder sonstigen Form eine Seite der jeweiligen Erhebung in den im Querschnitt kreisförmigen umlaufenden Spannring übergeht. Alternativ zu einer polygonförmig ausgeführten Erhebung kann die Erhebung auch beispielsweise derart ausgeführt sein, dass sich ein Außendurchmesser der Hohlwelle zu einer jeweiligen Einleitungsstelle hin kontinuierlich erhöht, so dass die jeweilige Erhebung keine erkennbaren Kanten aufweist.

Gemäß einer zweiten Variante der ersten Ausführung ist zwischen der Spannvorrichtung und der Hohlwelle ein umlaufendes Adapterstück angeordnet, welches einen derart ausgebildeten Dickenverlauf hat, dass es zumindest im festen Zustand der Spannvorrichtung an den Einleitungsstellen eine radiale Kraft zwischen der Spannvorrichtung und der Hohlwelle überträgt. Dies ermöglicht es, mittels des Adapterstücks die Positionen der Einleitungsstellen zu definieren. Der Dickenverlauf kann beispielsweise derart ausgebildet sein, dass das Adapterstück außenseitig eine Anzahl von Vorsprüngen aufweist, wie sie mit Bezug auf die erste Variante beschrieben wurden. Insofern wird hier auf diese Ausführungen Bezug genommen.

Gemäß einer dritten Variante der ersten Ausführung weist die Hohlwelle an jeder Einleitungsstelle eine jeweilige außenliegende Passfedernut auf, wobei zwischen der Spannvorrichtung und der Hohlwelle eine Mehrzahl von Passfedern vorgesehen ist. Jede Passfeder ist dabei in einer jeweils zugeordneten Passfedernut enthalten und überträgt zumindest im festen Zustand der Spannvorrichtung an den Einleitungsstellen eine radiale Kraft zwischen der Spannvorrichtung und der Hohlwelle.

Diese Ausführung mit Passfedern ermöglicht es beispielsweise, für unterschiedliche Montagezwecke unterschiedliche Passfedern, beispielsweise aus unterschiedlichem Material oder mit unterschiedlicher Formgebung, vorzusehen. Die Passfedern können dabei bevorzugt konisch oder keilförmig ausgebildet sein. Außerdem können sie nach einer gewissen Laufzeit der Anordnung ausgetauscht werden, um eine Verschlechterung der Festigkeit der Verbindung zwischen der Hohlwelle und der Antriebswelle zu vermeiden oder nach einer festgestellten Verschlechterung dieser Verbindung die ursprüngliche Qualität der Verbindung wiederherzustellen.

Bei allen drei Varianten der ersten Ausführung werden mittels der konischen Bohrung des Spannrings an den Einleitungsstellen radial auf die Hohlwelle gerichtete Kräfte erzeugt, indem der Spannring axial derart verschoben wird, dass die sich an einer bestimmten axialen Position verjüngende konische Bohrung mit einem anderen Element, beispielsweise einer Erhebung oder einer Passfeder, in Eingriff kommt und dieses Element radial in Richtung auf die Hohlwelle drückt.

Ein Außenprofil, welches diese Elemente enthält, ist dabei bevorzugt konisch ausgeführt. Dies ermöglicht eine besonders gute Passung zwischen der konischen Bohrung des Spannrings und dem konisch ausgeführten Außenprofil der Hohlwelle, des Adapterstücks oder der Passfedern. Weiter bevorzugt entspricht eine Schräge des Konus des Außenprofils einer Schräge des Konus des Spannrings.

Hohlwellen oder Adapterstücke für die erste Ausführung wie beschrieben können beispielsweise durch Unrunddrehen erhalten werden. Damit kann in bekannter Weise eine Oberfläche eines runden Werkstücks entlang des Umfangs strukturiert werden.

Gemäß einer zweiten erfindungsgemäßen Ausführung weist die Hohlwelle ein Außenprofil auf, welches an den Einleitungsstellen jeweils eine radial nach außen gerichtete Erhebung aufweist. Die Spannvorrichtung ist dabei als relativ zur Hohlwelle konzentrisch drehbarer Spannring ausgeführt, welcher eine Mehrzahl von innenliegenden, jeweils einer Erhebung der Hohlwelle zugeordneten Vertiefungen aufweist. Die Vertiefungen weisen einen jeweiligen, entlang eines Umfangs des Spannrings veränderlichen Oberflächenverlauf auf, so dass die jeweils zugeordnete Erhebung bei Drehung des Spannrings in eine Richtung radial einwärts gedrückt wird und bei Drehung des Spannrings in entgegengesetzter Richtung freigegeben wird.

Mit einer solchen Ausführung wird anstelle der bei der ersten Ausführung beschriebenen axialen Verschiebung des Spannrings der Übergang zwischen losem und festem Zustand des Spannrings durch eine Drehung des Spannrings erreicht. Damit entfällt ein für das axiale Verschieben und das Betätigen einer Einrichtung zum axialen Verschieben, beispielsweise einer Schraube, nötiger Platzbedarf in axialer Richtung. Mit anderen Worten kann der Spannring bei der zweiten Ausführung vom losen in den festen Zustand und umgekehrt überführt werden, ohne dass hierfür zusätzlicher Platz in axialer Richtung notwendig wäre. Dies kann den Einbau unter beengten Platzverhältnissen erleichtern. Hinsichtlich der im Rahmen der zweiten Ausführung erwähnten Erhebungen sei auf die Ausführungen zu den Erhebungen bei der ersten Ausführung verwiesen, welche hier sinngemäß gelten. Bevorzugt sind die Erhebungen bei der zweiten Ausführung so ausgeführt, dass sie von den Vertiefungen beim Drehen des Spannrings in entsprechender Richtung leicht radial einwärts gedrückt werden können. Hierzu können diese beispielsweise im Querschnitt polygonförmig, insbesondere rechteckförmig, oder alternativ auch in angepasster Form gebogen ausgeführt sein.

Bei allen beschriebenen Ausführungen, mit Ausnahme der ersten Variante der ersten Ausführung, weist die Hohlwelle bevorzugt ein zylindrisches Außenprofil auf. Damit wird eine axial möglichst gleichmäßige Wirkung der Kräfte erreicht. Unter der Bezeichnung "zylindrisch" wird hierbei nicht zwangsläufig verstanden, dass das jeweilige Außenprofil völlig unstrukturiert ist, also im mathematischen Sinne dem Außenprofil eines Zylinders entspricht. Vielmehr wird hier unter dieser Bezeichnung verstanden, dass das jeweilige Außenprofil nicht konisch ist, also einen zumindest abschnittsweise in axialer Richtung nicht veränderlichen Querschnitt aufweist. Es kann jedoch trotzdem entlang des Umfangs strukturiert sein, beispielsweise durch das Vorsehen von Erhebungen, Passfedern, Nuten oder Ähnlichem.

### Kurze Beschreibung der Zeichnung

Weitere Ausführungen und Vorteile der Erfindung wird der Fachmann den nachfolgend mit Bezug auf die beigefügte Zeichnung beschriebenen Ausführungsbeispielen entnehmen. Dabei zeigen:
- Fig. 1a bis 1c: ein erstes Ausführungsbeispiel, und zwar eine Anordnung gemäß der ersten Variante der ersten Ausführung,
- Fig. 2a bis 2b: ein zweites Ausführungsbeispiel, und zwar eine alternative Anordnung gemäß der ersten Variante der ersten Ausführung,
- Fig. 3: ein drittes Ausführungsbeispiel, und zwar eine Anordnung gemäß der zweiten Variante der ersten Ausführung,
- Fig. 4: ein viertes Ausführungsbeispiel, und zwar eine Anordnung gemäß der dritten Variante der ersten Ausführung,
- Fig. 5a bis 5b: ein fünftes Ausführungsbeispiel, und zwar eine Anordnung gemäß der zweiten Ausführung,
- Fig. 6: ein weiteres Beispiel für eine Spannvorrichtung, die nicht Teil der Erfindung ist, und
- Fig. 7: ein weiteres Beispiel für eine Spannvorrichtung, die nicht Teil der Erfindung ist.

### Detaillierte Beschreibung der Ausführungsbeispiele

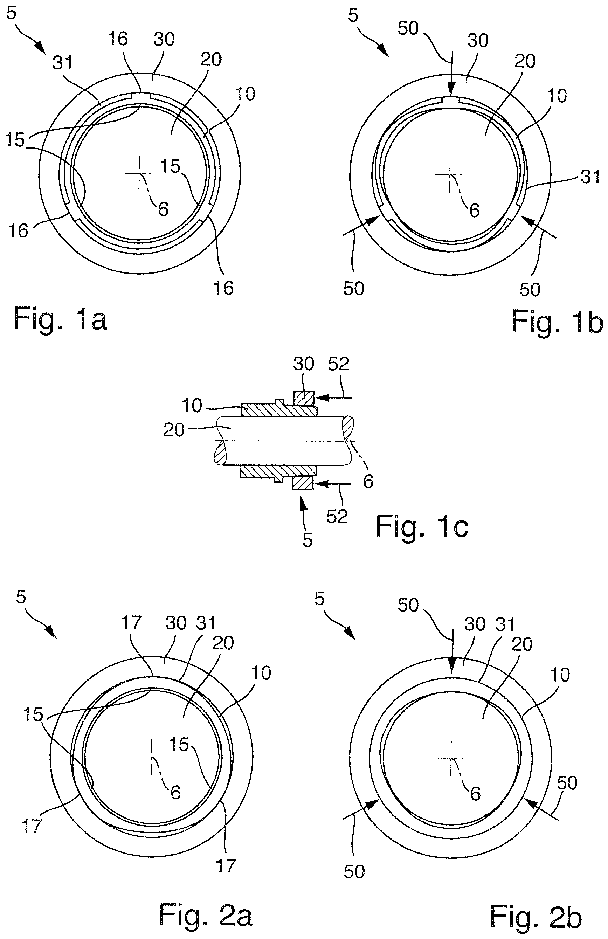

Fig. 1a bis 1c zeigen ein erstes Ausführungsbeispiel einer Anordnung 5, welche gemäß der ersten Variante der ersten Ausführung ausgebildet ist. Die Anordnung 5 weist eine Hohlwelle 10, eine Antriebswelle 20 und eine Spannvorrichtung auf, welche vorliegend als Spannring 30 ausgeführt ist. Die Antriebswelle 20 ist in der Hohlwelle 10 enthalten. Die Hohlwelle 10, die Antriebswelle 20 und der Spannring 30 sind konzentrisch zueinander mit einer gemeinsamen Achse 6 angeordnet, wobei der Spannring 30 außen angeordnet ist, die Antriebswelle 20 innen angeordnet ist und die Hohlwelle 10 zwischen der Antriebswelle 20 und dem Spannring 30 angeordnet ist.

Die Fig. 1a und 1b zeigen Querschnittsansichten. Fig. 1a zeigt dabei eine Situation, in welcher sich der Spannring 30 in seinem losen Zustand befindet. Fig. 1b zeigt eine Situation, in welcher sich der Spannring 30 in seinem festen Zustand befindet.

Die Hohlwelle 10 weist insgesamt drei Einleitungsstellen 15 auf, an welchen im festen Zustand des Spannrings 30 die Hohlwelle 10 radial auf die Antriebswelle 20 zu verbogen sein soll. Um dies zu erreichen, sind an den jeweiligen Einleitungsstellen 15 jeweilige Erhebungen 16 ausgebildet, welche vorliegend einen rechteckigen Querschnitt aufweisen. Um beim Übergang vom losen in den festen Zustand die entsprechenden Kräfte ausüben zu können, weist die Hohlwelle 10 ein in axialer Richtung konisches Außenprofil auf, und der Spannring 30 weist eine hierzu gegenläufig ausgebildete konische Bohrung 31 auf, in welcher die Hohlwelle 10 aufgenommen ist. Durch axiales Verschieben des Spannrings 30 relativ zur Hohlwelle 10 kann somit erreicht werden, dass Ränder der konischen Bohrung 31 auf die jeweiligen Vorsprünge 16 drücken und somit radial auf die Hohlwelle gerichtete Kräfte 50 ausüben. Dies ist in Fig. 1b dargestellt.

Beim Übergang zum festen Zustand des Spannrings 30, wie in Fig. 1b dargestellt, werden von dem Spannring 30 radial auf die Hohlwelle 10 gerichtete Kräfte 50 an den Einleitungsstellen 15 ausgeübt. Somit wird an den Einleitungsstellen 15 die Hohlwelle 10 zu der Antriebswelle 20 hin verbogen. Zwischen den Einleitungsstellen 15 wird die Hohlwelle 10 dagegen von der Antriebswelle 20 weg verbogen, so dass die Hohlwelle 10 und die Antriebswelle 20 nur noch in der Nähe der Einleitungsstellen 15 miteinander in Kontakt sind. Dies genügt jedoch, um die beiden Wellen 10, 20 relativ zueinander zu fixieren und eine Drehbewegung bzw. ein Drehmoment von einer Welle zur anderen zu übertragen.

Wie in Fig. 1b zu sehen ist, wird die Hohlwelle 10 beim Übergang vom losen in den festen Zustand des Spannrings 30 nicht auf Druck, sondern überwiegend auf Biegung beansprucht. Dabei ist die Hohlwelle 10 wesentlich flexibler als bei einer Beanspruchung auf Druck. Dies ermöglicht die Überbrückung von größeren Toleranzen der Radien der Hohlwelle 10 einerseits und der Antriebswelle 20 andererseits. Gleichzeitig wird damit eine Verringerung der erforderlichen Kräfte erreicht, da keine tangentiale Pressung der Hohlwelle 10 mehr erforderlich ist. Dies stellt einen erheblichen Vorteil der erfindungsgemäßen Anordnung dar, denn eine solche tangentiale Pressung ist bei Ausführungen gemäß dem Stand der Technik erforderlich und erfordert einen sehr hohen Kraftaufwand.

Fig. 1c zeigt die Anordnung 5 der Fig. 1a und 1b in einer seitlichen Schnittansicht. Dabei ist zu sehen, dass die Hohlwelle 10 und der Spannring 30 gegenläufige konische Außen- bzw. Innenoberflächen aufweisen. Der Zustand von Fig. 1c entspricht dabei demjenigen von Fig. 1b, d.h. der Spannring 30 befindet sich in seinem festen Zustand.

In Fig. 1c sind Kräfte 52 gezeigt, welche axial, d.h. parallel zur Achse 6 wirken, um den Spannring 30 von seinem losen in den festen Zustand zu überführen und in diesem zu halten. Diese Kräfte können beispielsweise mittels geeignet angeordneter Schrauben, welche parallel zur Achse 6 liegen und ein laterales Verschieben des Spannrings 30 relativ zur Hohlwelle 10 ermöglichen, erzeugt werden.

Die Fig. 2a und 2b zeigen ein zweites Ausführungsbeispiel einer Anordnung 5, welche ebenfalls gemäß der ersten Variante der ersten Ausführung ausgebildet ist. Im Vergleich zum ersten Ausführungsbeispiel ist das zweite Ausführungsbeispiel jedoch etwas abgewandelt. Dabei soll nachfolgend lediglich auf die Unterschiede eingegangen werden. Fig. 2a zeigt dabei wiederum eine Situation, in welcher sich der Spannring 30 in seinem losen Zustand befindet, und Fig. 2b zeigt eine Situation, in welcher sich der Spannring 30 in seinem festen Zustand befindet.

Im Gegensatz zum ersten Ausführungsbeispiel weist die Hohlwelle 10 bei dem zweiten Ausführungsbeispiel der Fig. 2a und 2b Erhebungen 17 auf, welche nicht rechteckförmig, sondern hügelförmig ausgebildet sind. Anders ausgedrückt wird bei den Erhebungen 17 auf scharfe Kanten verzichtet, so dass die Erhebungen 17 als Bereiche kontinuierlich ansteigender und abfallender Außenoberflächen der Hohlwelle 10 ausgebildet sind. Die Außenoberfläche der Hohlwelle 10 der Anordnung 5 gemäß dem zweiten Ausführungsbeispiel ist wie auch beim ersten Ausführungsbeispiel in axialer Richtung konisch ausgeführt, so dass ein Übergang vom losen in den festen Zustand des Spannrings 30 ebenso erfolgt wie bei der Ausführung der Fig. 1a bis 1c. Durch den Verzicht auf scharfe Kanten kann die Montage unter gewissen Bedingungen erleichtert werden.

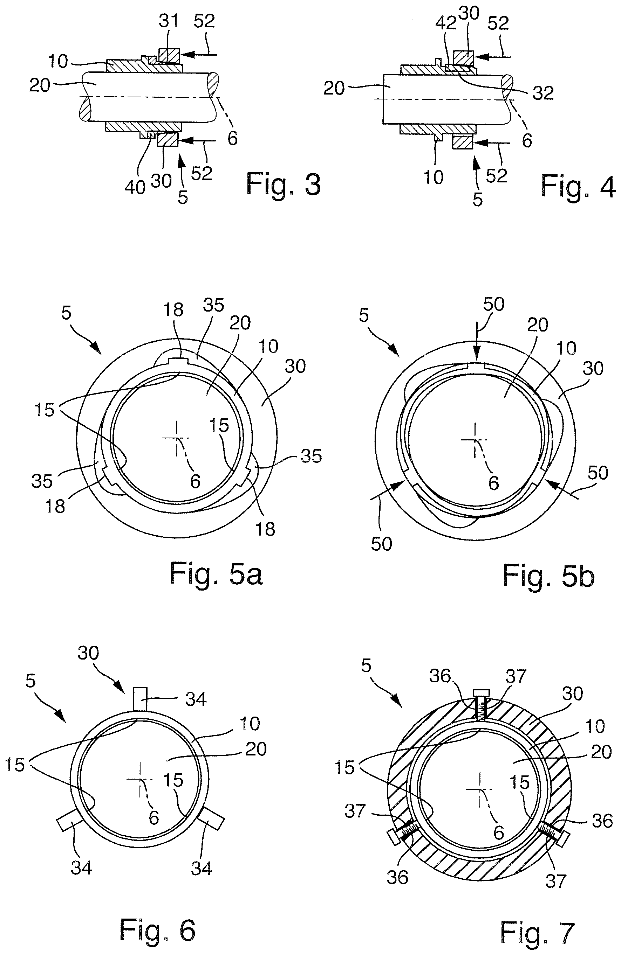

Fig. 3 zeigt ein drittes Ausführungsbeispiel einer Anordnung 5, welche gemäß der zweiten Variante der ersten Ausführung ausgebildet ist, wobei sich der Spannring 30 im festen Zustand befindet. Dabei befindet sich zwischen dem Spannring 30 und der Hohlwelle 10 ein Adapterstück 40, welches eine zur konischen Bohrung 31 gegenläufig ausgeführte konische Außenoberfläche aufweist. Die Außenoberfläche ist ferner ebenso wie die Außenoberfläche der Hohlwelle 10 von Fig. 1a mit jeweiligen Erhebungen versehen, welche in der Darstellung von Fig. 3 nicht erkennbar sind, da es sich dabei um eine seitliche Schnittansicht handelt. Der Übergang vom losen in den festen Zustand sowie die Art der Befestigung der Hohlwelle 10 auf der Antriebswelle 20 erfolgt ebenso wie bei dem ersten Ausführungsbeispiel. Im Unterschied dazu befindet sich lediglich das Adapterstück 40 zwischen der Hohlwelle 10 und dem Spannring 30.

Fig. 4 zeigt ein viertes Ausführungsbeispiel einer Anordnung 5, welche gemäß der dritten Variante der ersten Ausführung ausgebildet ist, wobei in Abwandlung zum dritten Ausführungsbeispiel anstelle des Adapterstücks 40 an den jeweiligen Einleitungsstellen 15 jeweilige Passfedern 42 vorgesehen sind, wovon in der Darstellung von Fig. 4 lediglich eine Passfeder 42 gezeigt ist. Die Passfedern 42 sind in jeweiligen Passfedernuten 32 der Hohlwelle 30 aufgenommen und weisen eine konische Außenoberfläche auf, welche gegenläufig zu der konischen Bohrung 31 des Spannrings 30 ausgebildet ist. Damit kann der Übergang vom losen in den festen Zustand ebenso erfolgen wie mit Bezug auf das erste Ausführungsbeispiel ausführlich beschrieben wurde. Es besteht hier lediglich der Unterschied, dass anstelle der Erhebungen 16, welche unmittelbar in der Hohlwelle 10 ausgebildet sind, die jeweiligen Passfedern 42 von dem Spannring 30 radial in Richtung auf die Hohlwelle gedrückt werden und auf diese Weise die erforderlichen Kräfte 50 ausüben. Auch dies erfolgt durch axiales Verschieben des Spannrings 30 mittels hierzu geeigneter axialer Kräfte 52.

Es sei angemerkt, dass bei den dritten und vierten Ausführungsbeispielen gemäß den Fig. 3 und 4 die Hohlwelle 30 eine zylindrische Außenoberfläche aufweist, was nicht von Nachteil ist, da das Adapterstück 40 bzw. die Passfedern 42 konisch ausgeführt sind und damit ein Gegenstück zur konischen Bohrung 31 des Spannrings 30 bilden. Bei den ersten und zweiten Ausführungsbeispielen gemäß den Fig. 1a bis 1c sowie 2a und 2b ist hingegen die Außenoberfläche der Hohlwelle 30 selbst entsprechend konisch ausgeführt. Die Ausführungen gemäß den dritten und vierten Ausführungsbeispielen können somit bevorzugt verwendet werden, wenn bereits eine Hohlwelle 10 mit zylindrischer Außenoberfläche vorhanden ist.

Die Fig. 5a und 5b zeigen ein fünftes Ausführungsbeispiel einer Anordnung 5, welche gemäß der zweiten Ausführung ausgebildet ist. Auch hierbei ist eine Hohlwelle 10 von einer Spannvorrichtung in Form eines Spannrings 30 umgeben und soll auf eine Antriebswelle 20, welche in der Hohlwelle 10 enthalten ist, montiert werden. Hierzu sind ebenfalls drei Einleitungsstellen 15 vorgesehen, an welchen radial auf die Hohlwelle 10 gerichtete Kräfte 50 in die Hohlwelle 10 eingeleitet werden sollen, damit sich die Hohlwelle 10 an den Einleitungsstellen 15 auf die Antriebswelle 20 und zwischen den Einleitungsstellen 15 von der Antriebswelle 20 weg verbiegt.

Fig. 5a zeigt eine Situation, in welcher sich der Spannring 30 in seinem losen Zustand befindet. Im Unterschied zum bisher beschriebenen Spannring weist der Spannring 30 gemäß dem fünften Ausführungsbeispiel keine konische Bohrung auf, sondern weist vielmehr drei innenliegende Vertiefungen 35 auf. Die Vertiefungen 35 sind jeweils einer Erhebung 18 der Hohlwelle 10 zugeordnet, wobei die Erhebungen 18 der Hohlwelle 10 ebenso ausgeführt sind wie die Erhebungen 16, welche bereits mit Bezug auf das erste Ausführungsbeispiel beschrieben wurden.

Um den Spannring 30 von seinem in Fig. 5a gezeigten losen Zustand zu seinem festen Zustand zu überführen, welcher in Fig. 5b gezeigt ist, wird der Spannring 30 gedreht. Dabei kommen jeweilige Innenoberflächen der Vertiefungen 35 mit den Erhebungen 18 in Eingriff und drücken die Erhebungen 18 aufgrund der sich bei der Drehung verjüngenden Innenoberfläche der jeweiligen Vertiefung 35 radial nach innen. Anders ausgedrückt wird durch die Drehung des Spannrings 30 erreicht, dass an den Einleitungsstellen 15 radial auf die Hohlwelle 30 gerichtete Kräfte 50 erzeugt werden. Damit wird ebenso wie bei den bisher beschriebenen Ausführungen erreicht, dass die Hohlwelle 10 an den Einleitungsstellen 15 zu der Antriebswelle 20 hin verbogen wird, während sie zwischen den Einleitungsstellen 15 von der Antriebswelle 20 weg verbogen wird. Auch in diesem Fall wird somit eine sichere Verbindung zwischen der Hohlwelle 10 und der Antriebswelle 20 unter Beanspruchung der Hohlwelle 10 auf Biegung erreicht, was die bereits beschriebenen Vorteile mit sich bringt.

Fig. 6 zeigt ein weiteres Beispiel für eine Spannvorrichtung, die nicht Teil der Erfindung ist. Dabei ist die Spannvorrichtung 30 in Form eines Dreibackenfutters ausgeführt, welches drei Backen 34 aufweist. Die Spannvorrichtung 30 befindet sich in der in Fig. 6 gezeigten Situation in ihrem losen Zustand. Die drei Backen 34 liegen dabei an der Hohlwelle 10 an und können in bekannter Art und Weise radial auf die Hohlwelle 10 zu bewegt werden, um an den drei Einleitungsstellen 15 radial auf die Hohlwelle gerichtete Kräfte auszuüben. Damit kann sich die Hohlwelle 10 in gleicher Art und Weise wie bereits mit Bezug auf die vorherigen Figuren beschrieben wurde an den Einleitungsstellen 15 nach innen verbiegen, wobei gleichzeitig erreicht wird, dass die Hohlwelle 10 sich zwischen den Einleitungsstellen 15 von der Antriebswelle 20 weg verbiegt.

Das in Fig. 6 gezeigte Beispiel ermöglicht die Verwendung eines bekannten Dreibackenfutters zur Verbindung einer Hohlwelle 10 mit einer Antriebswelle 20.

Fig. 7 zeigt ein weiteres Beispiel für eine Spannvorrichtung, die nicht Teil der Erfindung ist. Dabei ist die Spannvorrichtung als Spannring 30 ausgeführt, welcher drei Bohrungen 36 aufweist. Die Bohrungen 36 sind radial ausgerichtet. Durch die Bohrungen 36 ist jeweils eine Schraube 37 geführt, welche aufgrund der Anordnung der jeweiligen Bohrungen 36 ebenfalls radial ausgerichtet ist. Durch Drehen der Schrauben 37, welche in bekannter Weise über Außengewinde verfügen, können die Schrauben 37 auf die Hohlwelle 10 zu bewegt werden. Auf diese Weise können an den jeweiligen Einleitungsstellen 15, denen jeweils eine Schraube 37 zugeordnet ist, jeweilige Kräfte auf die Hohlwelle 10 ausgeübt werden, welche radial auf die Hohlwelle 10 wirken und die Hohlwelle 10 auf die Antriebswelle 20 zu verbiegen. Zwischen den Einleitungsstellen 15 verbiegt sich dabei die Hohlwelle 10 von der Antriebswelle 20 weg, ebenso wie dies bereits mit Bezug auf die vorhergehenden Figuren beschrieben wurde. Damit kann durch Eindrehen der Schrauben 37 die Spannvorrichtung von dem in Fig. 7 dargestellten losen Zustand in einen festen Zustand überführt werden.

Die gezeigten Ausführungen ermöglichen eine einfache und schnelle Montage einer Hohlwelle auf einer Antriebswelle, wobei die Hohlwelle nicht auf Druck, sondern auf Biegung beansprucht wird und somit unter Einsatz eines vergleichsweise geringen Kraftaufwands auch die Überbrückung von größeren Differenzen zwischen dem Innenradius der Hohlwelle und dem Außenradius der Antriebswelle möglich ist. Damit hebt sich eine erfindungsgemäße Anordnung deutlich vom Stand der Technik ab.

## Patentansprüche

1. Anordnung (5), aufweisend:
- eine Hohlwelle (10),
- eine in der Hohlwelle (10) teilweise enthaltene Antriebswelle (20) und
- eine Spannvorrichtung (30), wobei die Spannvorrichtung (30) einen losen Zustand, in welchem die Hohlwelle (10) und die Antriebswelle (20) voneinander entfernbar sind, und einen festen Zustand, in welchem die Hohlwelle (10) mit der Antriebswelle (20) verbunden ist, aufweist,
- wobei die Spannvorrichtung (30) beim Übergang vom losen in den festen Zustand an zumindest drei diskreten, entlang eines Umfangs der Hohlwelle (10) angeordneten Einleitungsstellen (15) radial auf die Hohlwelle (10) gerichtete Kräfte (50) in die Hohlwelle (10) einleitet, so dass sich die Hohlwelle (10) an den Einleitungsstellen (15) in Richtung auf die Antriebswelle (20) zu und zwischen den Einleitungsstellen (15) von der Antriebswelle (20) weg verbiegt,
**dadurch gekennzeichnet, dass**
- die Spannvorrichtung (30) als Spannring (30) ausgeführt ist,
- wobei der Spannring (30) eine konische Bohrung (31) aufweist, und wobei die Spannvorrichtung (30) relativ zur Hohlwelle (10) axial verschiebbar angeordnet ist, so dass sie beim Übergang vom losen in den festen Zustand die Hohlwelle (10) mittels der konischen Bohrung (31) an den Einleitungsstellen (15) radial einwärts drückt.

2. Anordnung (5) nach Anspruch 1, wobei die Einleitungsstellen (15) gleichmäßig über den Umfang der Hohlwelle (10) verteilt sind.

3. Anordnung (5) nach einem der Ansprüche 1 oder 2, wobei der Spannring (30) als geschlossener Spannring ausgeführt ist.

4. Anordnung (5) nach einem der vorhergehenden Ansprüche, wobei die Hohlwelle (10) ein Außenprofil aufweist, welches an den Einleitungsstellen (15) jeweils eine radial nach außen gerichtete, in axialer Richtung konisch ausgeführte Erhebung (16) aufweist.

5. Anordnung (5) nach einem der Ansprüche 1 bis 3, wobei zwischen der Spannvorrichtung (30) und der Hohlwelle (10) ein umlaufendes Adapterstück (40) angeordnet ist, welches einen derart ausgebildeten Dickenverlauf hat, dass es zumindest im festen Zustand der Spannvorrichtung (30) an den Einleitungsstellen (15) eine radiale Kraft (50) zwischen der Spannvorrichtung (30) und der Hohlwelle (10) überträgt.

6. Anordnung (5) nach einem der Ansprüche 1 bis 3, wobei die Hohlwelle (10) an jeder Einleitungsstelle (15) eine jeweilige außenliegende Passfedernut (32) aufweist, wobei zwischen der Spannvorrichtung (30) und der Hohlwelle (10) eine Mehrzahl von Passfedern (42) vorgesehen ist, und wobei jede Passfeder (42) in einer jeweils zugeordneten Passfedernut (32) enthalten ist und zumindest im festen Zustand der Spannvorrichtung (30) an den Einleitungsstellen (15) eine radiale Kraft (50) zwischen der Spannvorrichtung (30) und der Hohlwelle (10) überträgt.

7. Anordnung (5), aufweisend:
- eine Hohlwelle (10),
- eine in der Hohlwelle (10) teilweise enthaltene Antriebswelle (20) und
- eine Spannvorrichtung (30), wobei die Spannvorrichtung (30) einen losen Zustand, in welchem die Hohlwelle (10) und die Antriebswelle (20) voneinander entfernbar sind, und einen festen Zustand, in welchem die Hohlwelle (10) mit der Antriebswelle (20) verbunden ist, aufweist,
- wobei die Spannvorrichtung (30) beim Übergang vom losen in den festen Zustand an zumindest drei diskreten, entlang eines Umfangs der Hohlwelle (10) angeordneten Einleitungsstellen (15) radial auf die Hohlwelle (10) gerichtete Kräfte (50) in die Hohlwelle (10) einleitet, so dass sich die Hohlwelle (10) an den Einleitungsstellen (15) in Richtung auf die Antriebswelle (20) zu und zwischen den Einleitungsstellen (15) von der Antriebswelle (20) weg verbiegt,
**dadurch gekennzeichnet, dass**
- die Spannvorrichtung (30) als Spannring (30) ausgeführt ist,
- wobei die Hohlwelle (10) ein Außenprofil aufweist, welches an den Einleitungsstellen (15) jeweils eine radial nach außen gerichtete Erhebung (18) aufweist, wobei der Spannring (30) relativ zur Hohlwelle (10) konzentrisch drehbar ausgeführt ist, wobei der Spannring (30) eine Mehrzahl von innenliegenden, jeweils einer Erhebung der Hohlwelle (10) zugeordneten Vertiefungen (35) aufweist, und wobei die Vertiefungen (35) einen jeweiligen, entlang eines Umfangs des Spannrings (30) veränderlichen Oberflächenverlauf aufweisen, so dass die jeweils zugeordnete Erhebung bei Drehung des Spannrings (30) in eine Richtung radial einwärts gedrückt wird und bei Drehung des Spannrings (30) in entgegengesetzter Richtung freigegeben wird.

8. Anordnung (5) nach Anspruch 7, wobei die Hohlwelle (10) ein zylindrisches Außenprofil aufweist.

## Claims

1. Arrangement (5), comprising:
- a hollow shaft (10),
- an input shaft (20) partially contained in the hollow shaft (10), and
- a clamping device (30), wherein the clamping device (30) has a loose state in which the hollow shaft (10) and the input shaft (20) are removable from each other, and a fixed state in which the hollow shaft (10) is connected to the input shaft (20),
- wherein, during the transition from the loose state into the fixed state, the clamping device (30) introduces forces (50) which are directed radially to the hollow shaft (10) into the hollow shaft (10) at at least three discrete introduction points (15) arranged along a circumference of the hollow shaft (10) such that the hollow shaft (10) bends in the direction of the input shaft (20) at the introduction points (15) and bends away from the input shaft (20) between the introduction points (15),
**characterized in that**
- the clamping device (30) is designed as a clamping ring (30),
- wherein the clamping ring (30) has a conical bore (31), and wherein the clamping device (30) is arranged in an axially displaceable manner relative to the hollow shaft (10) such that, during the transition from the loose state into the fixed state, said clamping device presses the hollow shaft (10) radially inward by means of the conical bore (31) at the introduction points (15).

2. Arrangement (5) according to claim 1, wherein the introduction points (15) are distributed uniformly over the circumference of the hollow shaft (10).

3. Arrangement (5) according to any of the claims 1 or 2, wherein the clamping ring (30) is designed as a closed clamping ring.

4. Arrangement (5) according to any of the preceding claims, wherein the hollow shaft (10) has an external profile which, at the introduction points (15), has a respective radially outwardly directed elevation (16) which is of conical design in the axial direction.

5. Arrangement (5) according to any of the claims 1 to 3, wherein an encircling adaptor piece (40) is arranged between the clamping device (30) and the hollow shaft (10), which adaptor piece has a thickness profile designed in such a manner that, at least in the fixed state of the clamping device (30), said adaptor piece transmits a radial force (50) between the clamping device (30) and the hollow shaft (10) at the introduction points (15).

6. Arrangement (5) according to any of the claims 1 to 3, wherein the hollow shaft (10) has a respective external key slot (32) at each introduction point (15), wherein a plurality of keys (42) is provided between the clamping device (30) and the hollow shaft (10), and wherein each key (42) is contained in a respectively assigned key slot (32) and, at least in the fixed state of the clamping device (30), transmits a radial force (50) between the clamping device (30) and the hollow shaft (10) at the introduction points (15).

7. Arrangement (5), comprising:
- a hollow shaft (10),
- an input shaft (20) partially contained in the hollow shaft (10), and
- a clamping device (30), wherein the clamping device (30) has a loose state in which the hollow shaft (10) and the input shaft (20) are removable from each other, and a fixed state in which the hollow shaft (10) is connected to the input shaft (20),
- wherein, during the transition from the loose state into the fixed state, the clamping device (30) introduces forces (50) which are directed radially to the hollow shaft (10) into the hollow shaft (10) at at least three discrete introduction points (15) arranged along a circumference of the hollow shaft (10) such that the hollow shaft (10) bends in the direction of the input shaft (20) at the introduction points (15) and bends away from the input shaft (20) between the introduction points (15),
**characterized in that**
- the clamping device (30) is designed as a clamping ring (30),
- wherein the hollow shaft (10) has an external profile which, at the introduction points (15), has a respective radially outwardly directed elevation (18), wherein the clamping ring (30) is rotatable concentrically relative to the hollow shaft (10), wherein the clamping ring (30) has a plurality of internal depressions (35) in each case assigned to an elevation of the hollow shaft (10), and wherein the depressions (35) have a respective surface profile which is changeable along a circumference of the clamping ring (30) such that the respectively assigned elevation is pressed radially inward when the clamping ring (30) is rotated in one direction and is released when the clamping ring (30) is rotated in the opposite direction.

8. Arrangement (5) according to claim 7, wherein the hollow shaft (10) has a cylindrical external profile.

## Revendications

1. Agencement (5), présentant :
- un arbre creux (10),
- un arbre d'entraînement (20) contenu en partie dans l'arbre creux (10) et
- un dispositif de serrage (30), le dispositif de serrage (30) présentant un état libéré dans lequel l'arbre creux (10) et l'arbre d'entraînement (20) peuvent être éloignés l'un de l'autre, et un état fixé dans lequel l'arbre creux (10) est connecté à l'arbre d'entraînement (20),
- le dispositif de serrage (30), lors du passage de l'état libéré à l'état fixé, introduisant dans l'arbre creux (10) des forces (50) orientées radialement vers l'arbre creux (10) au niveau d'au moins trois points d'introduction (15) discrets disposés le long d'une périphérie de l'arbre creux (10) de telle sorte que l'arbre creux (10) se déforme, au niveau des points d'introduction (15), dans la direction de l'arbre d'entraînement (20) et entre les points d'introduction (15), à l'écart de l'arbre d'entraînement (20),
**caractérisé en ce que**
- le dispositif de serrage (30) est réalisé sous forme de bague de serrage (30),
- la bague de serrage (30) présentant un alésage conique (31) et le dispositif de serrage (30) étant disposé de manière déplaçable axialement par rapport à l'arbre creux (10) de telle sorte que lors du passage de l'état libéré à l'état fixé, il presse l'arbre creux (10) radialement vers l'intérieur au moyen de l'alésage conique (31) au niveau des points d'introduction (15).

2. Agencement (5) selon la revendication 1, dans lequel les points d'introduction (15) sont répartis uniformément sur la périphérie de l'arbre creux (10).

3. Agencement (5) selon l'une quelconque des revendications 1 et 2, dans lequel la bague de serrage (30) est réalisée sous forme de bague de serrage fermée.

4. Agencement (5) selon l'une quelconque des revendications précédentes, dans lequel l'arbre creux (10) présente un profil extérieur qui présente, au niveau des points d'introduction (15), à chaque fois un rehaussement (16) orienté radialement vers l'extérieur, réalisé sous forme conique dans la direction axiale.

5. Agencement (5) selon l'une quelconque des revendications 1 à 3, dans lequel, entre le dispositif de serrage (30) et l'arbre creux (10) est disposée une pièce d'adaptateur périphérique (40) qui présente une allure d'épaisseur réalisée de telle sorte qu'au moins dans l'état fixé du dispositif de serrage (30) au niveau des points d'introduction (15), elle transfère une force radiale (50) entre le dispositif de serrage (30) et l'arbre creux (10).

6. Agencement (5) selon l'une quelconque des revendications 1 à 3, dans lequel l'arbre creux (10) présente, au niveau de chaque point d'introduction (15), une rainure de ressort d'ajustement (32) respective située à l'extérieur, une pluralité de ressorts d'ajustement (42) étant prévus entre le dispositif de serrage (30) et l'arbre creux (10), et chaque ressort d'ajustement (42) étant contenu dans une rainure de ressort d'ajustement (32) respectivement associée et au moins dans l'état fixé du dispositif de serrage (30) au niveau des points d'introduction (15), transmettant une force radiale (50) entre le dispositif de serrage (30) et l'arbre creux (10).

7. Agencement (5), présentant :
- un arbre creux (10),
- un arbre d'entraînement (20) contenu en partie dans l'arbre creux (10) et
- un dispositif de serrage (30), le dispositif de serrage (30) présentant un état libéré dans lequel l'arbre creux (10) et l'arbre d'entraînement (20) peuvent être éloignés l'un de l'autre, et un état fixé dans lequel l'arbre creux (10) est connecté à l'arbre d'entraînement (20),
- le dispositif de serrage (30), lors du passage de l'état libéré à l'état fixé, introduisant dans l'arbre creux (10) des forces (50) orientées radialement vers l'arbre creux (10) au niveau d'au moins trois points d'introduction (15) discrets disposés le long d'une périphérie de l'arbre creux (10) de telle sorte que l'arbre creux (10) se déforme, au niveau des points d'introduction (15), dans la direction de l'arbre d'entraînement (20) et entre les points d'introduction (15), à l'écart de l'arbre d'entraînement (20), **caractérisé en ce que**
- le dispositif de serrage (30) est réalisé sous forme de bague de serrage (30),
- l'arbre creux (10) présentant un profil extérieur qui présente à chaque fois un rehaussement orienté radialement vers l'extérieur (18) au niveau des points d'introduction (15), la bague de serrage (30) étant réalisée de manière à pouvoir tourner concentriquement par rapport à l'arbre creux (10), la bague de serrage (30) présentant une pluralité de renfoncements situés à l'intérieur (35), à chaque fois associés à un rehaussement de l'arbre creux (10), et les renfoncements (35) présentant une allure de surface respective variant le long d'une périphérie de la bague de serrage (30) de telle sorte que le rehaussement respectivement associé soit pressé lors de la rotation de la bague de serrage (30) dans une direction radialement vers l'intérieur et soit libéré lors d'une rotation de la bague de serrage (30) dans la direction opposée.

8. Agencement (5) selon la revendication 7, dans lequel l'arbre creux (10) présente un profil extérieur cylindrique.
